(19) Europäisches Patentamt

European Patent Office

Office européen des brevets

(11) **EP 2 579 483 A1**

(12) **EUROPEAN PATENT APPLICATION**

(43) Date of publication:
**10.04.2013 Bulletin 2013/15**

(51) Int Cl.:
*H04B 10/2581* (2013.01)   *G02B 6/26* (2006.01)
*H04J 14/04* (2006.01)

(21) Application number: **11306210.3**

(22) Date of filing: **23.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Franz, Bernd**
  **74336 Brackenheim (DE)**
• **Buelow, Henning**
  **70806 Kornwestheim (DE)**

(74) Representative: **Urlichs, Stefan et al**
  **Alcatel-Lucent Deutschland AG**
  **Intellectual Property & Corporate Standards**
  **Lorenzstrasse 10**
  **70435 Stuttgart (DE)**

(54) **Multi-mode optical transmission system**

(57)    The present invention provides a method and related apparatus for transmitting optical signals over a multi-mode fiber using spatial multiplexing. Optical signals are multiplexed into different principle mode groups of a graded-index multi-mode fiber. At the receiver different principle mode groups are separated through an optical Fourier transformation.

*Fig. 2*

EP 2 579 483 A1

## Description

### Field of the Invention

The present invention relates to the field of telecommunications and more particularly to a method and related apparatus for transmitting optical signals over a multi-mode fiber using spatial multiplexing.

### Background of the Invention

In optical transmission networks, the amount of data to be transmitted is ever increasing, thus leading to higher bitrates and the development of system with higher spectral efficiency. Wavelength division multiplexing is used to transmit a plurality of data signals at different carrier wavelengths over an standard single-mode optical fiber. A further degree of freedom that can be utilized is the signal polarization, so that signals at the same wavelength but having orthogonal polarization can be transmitted in parallel over a fiber. Today, systems are available that can transport 100 Gb/s signals per wavelength at a standard 50 GHz ITU wavelength grid. The introduction of higher constellation modulation schemes may allow to increase the bitrate to maybe 400 Gb/s but it can be expected that at even higher signal rates, the signal spectra of the individual wavelength channels will become broader and require a larger channel spacing, so that the total spectral efficiency of a standard single mode fiber reaches its physical limits.

It has recently been proposed to introduce as a further degree of freedom the spatial modes of propagation in multi-mode optical fibers. This is referred to as spatial or mode multiplexing. This requires a mode conversion at the transmitter to couple optical signals to individual modes of the optical fiber and the separation of the modes at the transmitter. This as such is difficult to accomplish. A multi-mode fiber with a large core diameter of for example $50\mu m$ provides more than 100 modes, which makes it quite difficult to address all these modes individually. Multi-mode transmission is further complicated through mode-coupling that leads to crosstalk between transmission modes, particularly when their propagation constants are quite similar.

### Summary of the Invention

present invention provides a method and related apparatus for transmitting optical signals over a multi-mode fiber using spatial multiplexing, which is simple and reliable.

The present invention realizes that principle mode groups in a graded-index multi-mode fiber show transmission properties which are robust against inter-mode mixing and cross-talk and provides a simplified solution to separate different principle mode groups through an optical Fourier transformation at the receiver.

In particular, to transmit optical signals over a multi-mode optical fiber a space division multiplexed optical signal is formed by spatially multiplexing optical signals into propagation modes of the multi-mode optical fiber that belong to different principle mode groups. After transmitting the space division multiplexed optical signal over the multi-mode fiber, an optical Fourier transformation is performed to spatially separate the multiplexed optical signals from the space division multiplexed optical signal.

This avoids the need for a complex mode conversion at the receiver side.

### Brief Description of the Drawings

Preferred embodiments of the present invention will now be described with reference to the accompanying drawings in which

figure 1        shows the principle of spatial multiplexing in a multi-mode optical fiber;

figure 2        shows a block diagram of a transmission system using an optical Fourier Transformation to de-multiplex principle mode groups at the receiver side;

figures 3a-f    show intensity distribution at the fiber output for different propagation modes before and after an optical Fourier transformation;

figure 4        shows the principle of a spatial light modulator at the transmitter side;

figure 5        shows the spatial multiplexing of four different input signals; and

figure 6        shows the intensity distribution of different propagation modes in a multi-mode fiber.

**Detailed Description of the Invention**

Multi-mode fibers (MMF) exhibit a higher transport capacity limit than single-mode fibers (SMF), provided that the various optical modes can be exploited as independent communication channels with individual scattering paths. In the optimum case the individual transmission paths are orthogonal by using e.g. individual modes. Fibers with a large core diameter, e.g. 50µm for standard MMF, provide more than 100 modes, which makes it quite difficult to address them individually. In addition, the propagation constants are quite similar, so that modal coupling easily occurs.

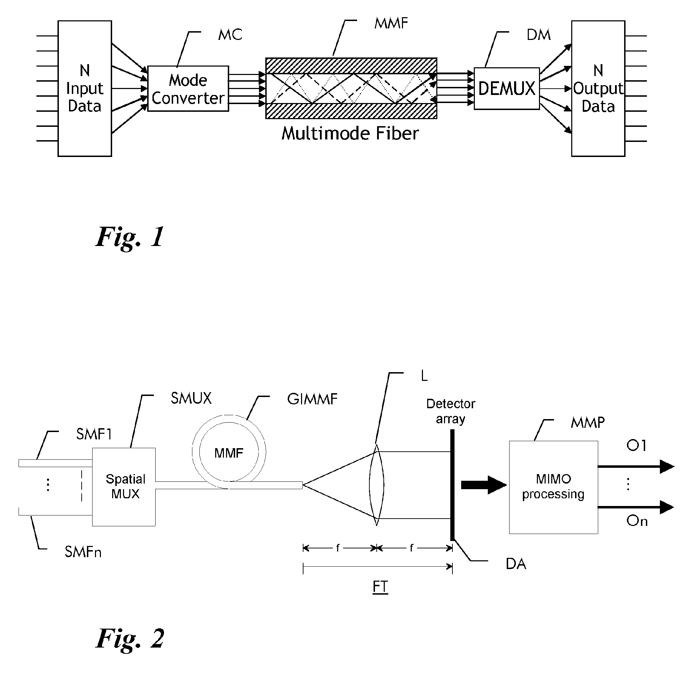

Figure 1 shows the principle of spatial multiplexing in a multi-mode optical fiber. N optical input signals are fed to a mode converter MC, which couples the input signals to different orthogonal propagation modes of a multi-mode optical fiber MMF. At the fiber output, the spatial multiplexed multi-mode signal is fed to a spatial de-multiplexer DM, which converts the N propagation modes back to N output optical data signals.

Usually, propagation modes in a MMF have different propagation constants. An exception occurs is graded index (GI) MMFs with a preferably parabolic index profile, where groups of modes with substantially identical propagation constants β exist. Such groups are referred to principle mode groups. In particular, radial (*p*) and azimuthal (*l*) order of modes fulfilling the equation

$$m = 2p + l + 1 \qquad\qquad [1]$$

where m denotes the number of the respective principal mode group, have (in the ideal case) identical propagation constants β.

The propagation constant β of a mode in a waveguide (e.g. a fiber) determines how the phase and amplitude of that light with a given frequency varies along the propagation direction z:

$$A(z) = A(0)\, exp(i\beta z) \qquad\qquad [2]$$

where A(x,y,z) is the complex amplitude of the light field. β may actually be complex; its real part is then the phase delay per unit propagation distance, whereas the imaginary part describes optical gain (if negative) or loss (if positive). The propagation constant can be expressed as the product of the effective refractive index and the vacuum wavenumber.

The propagation constant depends on the optical frequency (or wavelength) of the light. This frequency dependence determines the group delay and the chromatic dispersion of the waveguide.

Table 1: Principle mode groups in a GI-MMF

| m | mode |
|---|---|
| 3 | LP01 |
| 4 | LP11 |
| 5 | LP02, LP21 |
| 6 | LP12,LP31 |
| 7 | LP03, LP22, LP41 |
| 8 | LP13, LP32, LP51 |
| 9 | LP04, LP23, LP42, LP61 |

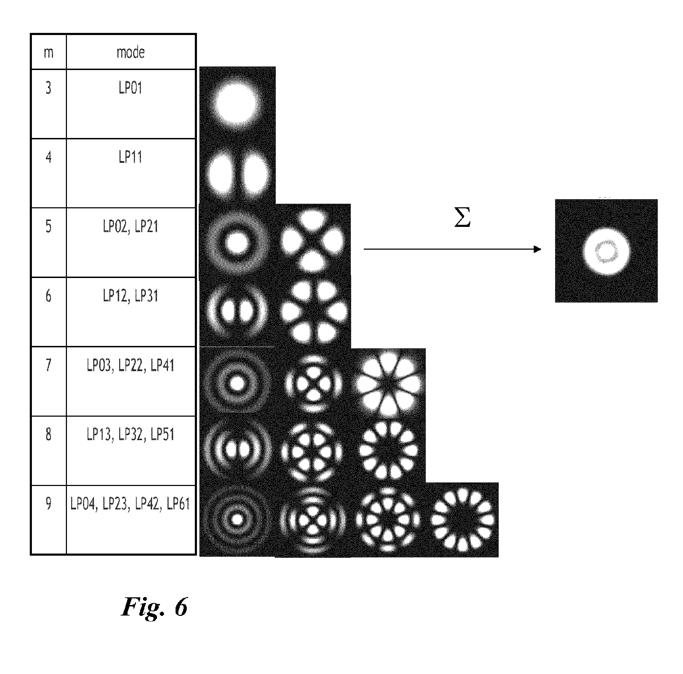

Table 1 lists the modes of the first seven principle modes groups m=3-9 in a graded index multi-mode fiber. Figure 6 shows light intensity distribution at the fiber output for the different modes plus at the right side of figure 6 a superposition of all modes belonging to mode group m=5.

Principal mode groups (PMG) in graded-index multi-mode fiber with a parabolic refractive index profile include all modes having the (substantially) same propagation constant β. Therefore these PMG have the potential to provide transmission channels with a high bandwidth, whereas the coupling between these groups is low due to different propagation constants. At the transmitter it is sufficient to excite one mode belonging to a certain PMG, whereas at the receiver preferably all possible modes of the respective PMG will be detected, because they could be excited by modal coupling within the PMG.

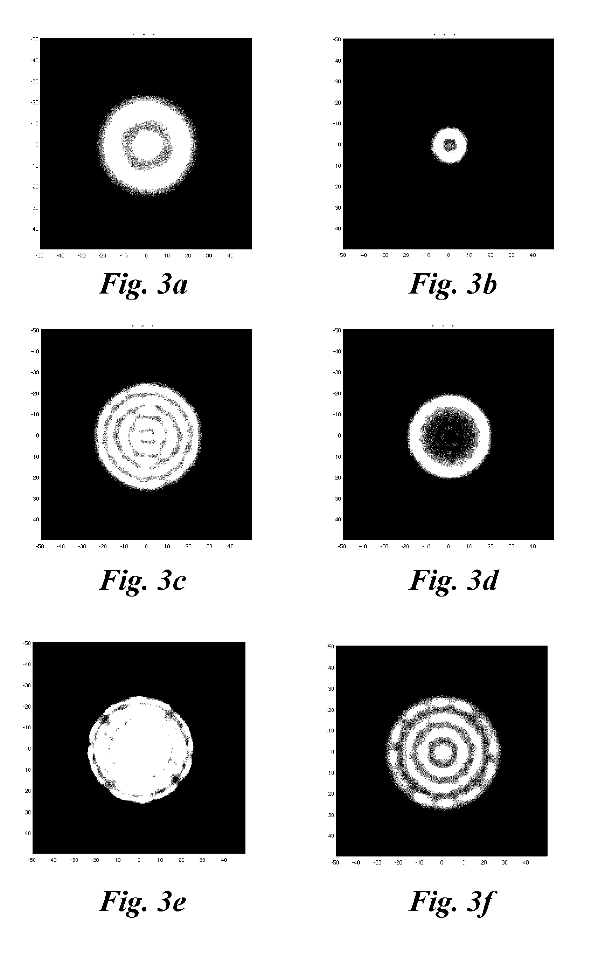

The spatial distributions of the intensity of the principal mode groups overlap at the end of the fiber, as can be seen for example from Fig. 3e, so that a simple spatial de-multiplexing is not possible or at least difficult. The inventors have discovered that an optical Fourier transform of the light, which can be performed for instance by a lens, results in rings with different radii for different principal mode groups, see Fig. 3f. This provides a simplified implementation to spatially de-multiplex the individual PMGs transmitted over a GI-MMF.

Figure 2 shows the block diagram of a transmission system. N optical input signals are fed via N single mode fibers SMF1 -SMFn to a spatial multiplexer SMUX, which converts the incoming LP01 modes of the single mode fibers SMF1-SMFn to LP modes belonging to different principle mode groups. The mode-converted, spatial multiplexed signal mix is then fed to a graded-index multi-mode fiber GIMMF.

In the embodiment, the fiber GIMMF has a core diameter of 50 $\mu$m which allows parallel transmission of 8 principle mode groups at a wavelength of 1550 nm.

After transmission through fiber GIMMF, a converging lens L performs an optical Fourier transform FT, so that the different principle mode groups are spatially separated as rings with different radii. A detector array such as a pixel array or array of circular detectors, detects the rings of different radii and thus de-multiplexes the different principal mode groups representing the different transmission channels O1-On. The detector array can be implemented for instance through an array of photodiodes, an LCD sensor or the like.

Optionally, a MIMO processor MMP can be can be applied subsequently in order to reduce crosstalk through MIMO (multiple-input and multiple-output) processing. The operation of MIMO processing as such is well known to those skilled in the art and used for example for spatial multiplexing with multiple antenna configurations in radio transmission systems.

The spatially de-multiplexed signals can be detected either using conventional direct detection or using a coherent detector. When MIMO processing is required, coherent detection is preferred as this simplifies the subsequent MIMO processing.

Those skilled in the art will appreciate that a simple lens can perform an optical Fourier transform in real-time. An image, which is here the end face of the multi-mode fiber GIMMF, is placed at the focal length f of the lens L. At the other focus of the lens appears the Fourier representation of the input image. It may be observed that every point on the input image radiates an expanding cone of rays towards the lens. Since the image is at the focus of the lens, those rays will be refracted into a parallel beam that illuminates the entire detector array at the other focus of the lens. In other words, every point of the input image is spread uniformly over the Fourier image, where constructive and destructive interference will produce the Fourier representation. Note that the optical Fourier transformer automatically operates in the reverse direction also, where it performs an inverse Fourier transform, converting the Fourier representation back into a spatial brightness image.

Figure 3a-f show intensity distributions at the fiber end face and their corresponding Fourier representations. In particular, figure 3a shows the principle mode group m=5 (PMG5). Figure 3b shows the corresponding Fourier representation for PMG5. Figure 3c shows the intensity distribution of principle mode group PMG11 and figure 3d the corresponding Fourier representation. As can be observed, different principle mode groups collapse in the Fourier representation into individual rings of different radii. Figure 3e shows the intensity distribution for the superposition of four different principle mode groups. The corresponding Fourier representation is shown in figure 3f. As can be observed, it would be virtually impossible to separate the individual mode groups from the intensity distribution in figure 3e, while in its Fourier representation, the individual mode groups can be easily distinguished as separate concentric rings.

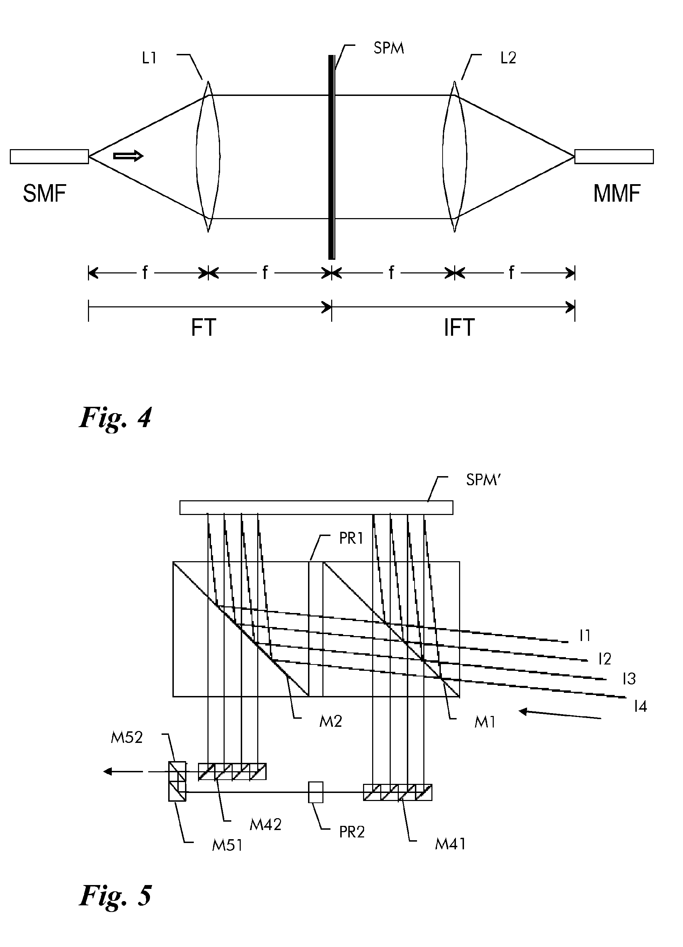

Embodiments for the spatial multiplexer SMUX are shown in figures 4 and 5. Use is made of a spatial phase modulator SPM, which in the embodiment is implemented as a liquid crystal on silicon (LCOS) device. Such LCOS devices are commercially available today and are used for example in LCD projectors, today.

In figure 4, an optical input signal from a single mode fiber SMF is Fourier transformed using a first lens L1. At the focal length f behind lens L1, an LCOS device serves as spatial phase modulator SPM. A second lens L2 is arranged at a focal length *f* behind LCOS device SPM while at its other side focus, the multi-mode fiber MMF is located into which the optical signal is coupled. In the field of Fourier optics, such arrangement is referred to as 4f-correlator. The spatial phase modulator SPM in this embodiment is a transmission device.

Lens L1 performs an optical Fourier transform FT on the input optical signal from single mode fiber SMF. The LCOS device SPM spatially modulates the optical signal in phase to match it to the Fourier representation of the propagation mode to which the signal is to be coupled. Lens L2 then performs an inverse Fourier transform to couple the signal to the respective propagation mode of multi-mode fiber MMF. The phase pattern that the LCOS device will use to excite the appropriate propagation mode can be simulated or even measured (since light paths are invertible). Instead of an LCOS device, which can be tuned to a required pattern, optical plates with different fixed phase pattern can be used for each of the channels.

Figure 5 shows how several optical input signals can be coupled into a multimode fiber. Four input signals I1-I4 are separated at a two-way mirror M1 into first and second polarization components. The first polarization component is reflected to spectral phase modulator SPM' while the second polarization component is transmitted. The transmitted polarization component is then rotated by a polarization rotating plate PR1 and reflected by two-way mirror M2 to spectral phase modulator SPM'. In this embodiment, spectral phase modulator SPM' is a reflective device.

The first group of input signals at the first polarization is reflected by spectral phase modulator SPM', transmits through two-way mirror M1 and is reflected by four serially aligned two-way mirrors M41, so that the four signal components are superposed. They then undergo polarization rotation, too, through polarization rotating plate PR2.

Similarly, the second group of input signals at the second polarization is reflected by spectral phase modulator SPM', transmits through two-way mirror M2 and is superposed by four serially aligned two-way mirrors M42.

Finally, the two superposed signal groups are again superposed through two-way mirrors M51 and M52 to form a final output signal to be coupled to multi-mode fiber MMF.

The lenses of the 4f-correlator are not shown in figure 5. In practice for each of the four input beams I1-I4 a separate first lens will be arranged in front of mirror M1 and a common second lens for the output beam will be arranged behind mirror M52.

It has been observed that the exact adjustment of the first and second lenses towards the spatial phase modulator in the focal plane is not very critical and moderate deviations from the focal length between the lenses and the modulator does not translate into considerable losses.

A further advantage of using an LCOS device as spatial phase modulator is that through by applying an appropriate Fresnel lens like structure to the phase modulator, misalignment of the first and second lenses can be compensated.

As an alternative to the above described embodiments for the mode coupling into the multi-mode fiber, it is also possible for instance, to couple the different single mode input signals under different angles into a multi-mode fiber, as shown for instance in the article "Spatial domain multiplexing: A new dimension in fiber optic multiplexing" by S. Murshid et al, Optics & Laser Technology 40 (2008) pages 1030-1036, which is incorporated by reference herein.

The above embodiments allow implementation of the invention with available discrete components. It should be understood, however, that an implementation in integrated optics, semiconductor- integrated circuits or the like would equally possible.

It should be understood that the individually spatially multiplexed optical signals can be WDM signals composed of individual wavelength channels, each. Preferably, such WDM signals contain wavelength channels in the wavelength range from 1525 to 1565 nm (C band), or 1570 to 1610 nm (L band).

If spectral efficiency is not of highest concern, it would be advantageously, too, to use only every second principle mode group (for example every even principle mode group) as signal channels and leave any other mode group (e.g. every odd principle mode group) unused. This would further relax overlap and crosstalk between signal channels.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method for transmitting optical signals over a multi-mode optical fiber using spatial multiplexing, comprising:

   - spatially multiplexing said optical signals using propagation modes of said multi-mode optical fiber (GIMMF) belonging to different principle mode groups to form a space division multiplexed optical signal;
   - transmitting said space division multiplexed optical signal over said multi-mode fiber (GIMMF); and
   - at the output of said multi-mode optical fiber (GIMMF), performing an optical Fourier transformation (FT) to spatially separate the multiplexed optical signals from the space division multiplexed optical signal.

2. A method according to claim 1, wherein said multi-mode optical fiber is a graded-index multi-mode fiber (GIMMF).

3. A method according to claim 2, wherein said graded index multi-mode fiber (GIMMF) has a parabolic index profile.

4. A method according to claim 1, wherein said principle mode groups contain propagation modes with substantially identical propagation constants.

5.   A method according to claim 1, wherein said optical Fourier transformation (FT) is performed using a lens (L) located by its focal length (f) away from an end face of said multi-mode optical fiber (GIMMF) and wherein an optical detector array (DA) is located in a second focal plane of said lens (L).

6.   A method according to claim 1, wherein a 4f-correlator (L1, L2) with a spatial phase modulator (SPM) is used for the spatially multiplexing of said optical signals.

7.   A receiver for receiving optical signals transmitted over a multi-mode optical fiber using spatial multiplexing, comprising an optical Fourier transformer (FT) arranged at an end face of said multi-mode optical fiber (GIMMF) for spatially separating optical signals multiplexed into propagation modes of said multi-mode optical fiber belonging to different principle mode groups.

8.   A receiver according to claim 7, comprising a detector array (DA) arranged behind said Fourier transformer (FT).

9.   A receiver according to claim 8, wherein said optical Fourier transformer (FT) comprises a lens (L) located by approximately its focal length (f) apart from the end face of said multi-mode optical fiber (GIMMF) and wherein said optical detector (DA) array is located in a second focal plane of said lens (L).

10.   A receiver according to claim 7, comprising a MIMO processor (MMP) for multiple-input and multiple-output processing of signals detected from said spatially separated principle mode groups.

MC — MMF — DM

N Input Data → Mode Converter → Multimode Fiber (MMF) → DEMUX → N Output Data

**Multimode Fiber**

## Fig. 1

SMUX — GIMMF — L — Detector array — MMP

SMF1
⋮
SMFn

Spatial MUX → MMF → L → Detector array (DA) → MIMO processing → O1 ⋮ On

$\underleftrightarrow{f}$ $\underleftrightarrow{f}$

FT

## Fig. 2

**Fig. 3a**

**Fig. 3b**

**Fig. 3c**

**Fig. 3d**

**Fig. 3e**

**Fig. 3f**

*Fig. 4*

*Fig. 5*

| m | mode |
|---|------|
| 3 | LP01 |
| 4 | LP11 |
| 5 | LP02, LP21 |
| 6 | LP12, LP31 |
| 7 | LP03, LP22, LP41 |
| 8 | LP13, LP32, LP51 |
| 9 | LP04, LP23, LP42, LP61 |

$\Sigma$

*Fig. 6*

Europäisches
Patentamt

European
Patent Office

Office européen
des brevets

# EUROPEAN SEARCH REPORT

**Application Number**

EP 11 30 6210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/182388 A1 (DELIWALA SHRENIK [US]) 17 August 2006 (2006-08-17) | 1-5,7-10 | INV. H04B10/13 G02B6/26 H04J14/04 |
| Y | * abstract * * paragraph [0024] - paragraph [0032] * * figures 2,-4, 7 * | 6 | |
| X | US 7 327 914 B1 (KAHN JOSEPH M [US] ET AL) 5 February 2008 (2008-02-05) * abstract * * column 1, line 6 - column 3, line 3 * * column 3, line 64 - column 4, line 34 * * figures 6A, 6B * | 1-4,7,10 | |
| X | MASSIMILIANO SALSI ET AL: "Transmission at 2x100Gb/s, over two modes of 40km-long prototype few-mode fiber, using LCOS-based mode multiplexer and demultiplexer", OPTICAL FIBER COMMUNICATION CONFERENCE, 2011. TECHNICAL DIGEST. OFC/NFOEC, IEEE, 6 March 2011 (2011-03-06), pages 1-3, XP031946753, ISBN: 978-1-4577-0213-6 * the whole document * | 1-4,6,7, 10 | |
| Y | STEPNIAK G ET AL: "Increasing multimode fiber transmission capacity by mode selective spatial light phase modulation", OPTICAL COMMUNICATION (ECOC), 2010 36TH EUROPEAN CONFERENCE AND EXHIBITION ON, IEEE, PISCATAWAY, NJ, USA, 19 September 2010 (2010-09-19), pages 1-3, XP031789891, ISBN: 978-1-4244-8536-9 * abstract * * Introduction * * figure 1 * | 6 | TECHNICAL FIELDS SEARCHED (IPC) H04B G02B H04J |

-/--

The present search report has been drawn up for all claims

| Place of search | Date of completion of the search | Examiner |
|---|---|---|
| Munich | 30 January 2012 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 11 30 6210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 03/050581 A1 (FLORIDA INST OF TECHNOLOGY [US]; MURSHID SYED [US]; GROSSMAN BARRY [US]) 19 June 2003 (2003-06-19) * abstract * * page 4, line 27 - page 6, line 10 * * page 39, lines 18-26 * * figures 3, 12, 22 * | 1-10 | |
| A | STEFAN SCHOLLMANN ET AL: "10.7 Gb/s Over 300 m GI-MMF Using a 2 * 2 MIMO System Based on Mode Group Diversity Multiplexing", OPTICAL FIBER COMMUNICATION CONFERENCE AND EXPOSITION NATIONAL FIBER OPTIC ENGINEERS CONFERENCE. OFCNFOEC 2007, 25-29 MARCH 2007, ANAHEIM, CA, USA, IEEE, PISCATAWAY, NJ, USA, 1 March 2007 (2007-03-01), pages 1-3, XP031146778, ISBN: 978-1-55752-831-5 * the whole document * | 1-10 | |

TECHNICAL FIELDS
SEARCHED    (IPC)

The present search report has been drawn up for all claims

| Place of search | Date of completion of the search | Examiner |
|---|---|---|
| Munich | 30 January 2012 | Rolan Cisneros, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 30 6210

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2012

| Patent document cited in search report | | Publication date | Patent family member(s) | | Publication date |
|---|---|---|---|---|---|
| US 2006182388 | A1 | 17-08-2006 | CN | 101120526 A | 06-02-2008 |
| | | | EP | 1847044 A1 | 24-10-2007 |
| | | | JP | 4448542 B2 | 14-04-2010 |
| | | | JP | 2008530904 A | 07-08-2008 |
| | | | US | 2006182388 A1 | 17-08-2006 |
| | | | US | 2007160323 A1 | 12-07-2007 |
| | | | WO | 2006088628 A1 | 24-08-2006 |
| US 7327914 | B1 | 05-02-2008 | US | 7327914 B1 | 05-02-2008 |
| | | | US | 2008069561 A1 | 20-03-2008 |
| | | | US | 2009169220 A1 | 02-07-2009 |
| WO 03050581 | A1 | 19-06-2003 | AU | 2002353071 A1 | 23-06-2003 |
| | | | WO | 03050581 A1 | 19-06-2003 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. MURSHID et al.** Spatial domain multiplexing: A new dimension in fiber optic multiplexing. *Optics & Laser Technology,* 2008, vol. 40, 1030-1036